# FASCICULE DE BREVET EUROPEEN

(11) **EP 3 858 740 B1**
(45) Date de publication et mention de la délivrance du brevet: **26.10.2022**
(21) Numéro de dépôt: 21154810.2
(22) Date de dépôt: 02.02.2021
(51) Int. Cl.: B64D 43/00, B64D 45/00

(54) **ENSEMBLE POUR UN AÉRONEF COMPORTANT UN TABLEAU DE BORD ET UN SYSTÈME DE SUPPORT POUR UNE TABLETTE TACTILE**
ANORDNUNG FÜR EIN LUFTFAHRZEUG MIT EINEM ARMATURENBRETT UND EINEM TRÄGERSYSTEM FÜR EIN TOUCHPAD
ASSEMBLY FOR AN AIRCRAFT COMPRISING A DASHBOARD AND A SUPPORT SYSTEM FOR A TOUCH PAD

(30) Priorité: 03.02.2020 FR 2001066
(43) Date de publication de la demande: 04.08.2021
(73) Titulaire: AIRBUS OPERATIONS (S.A.S.), 31060 Toulouse (FR)
(72) Inventeur: SALGUES, Patrick, 31060 TOULOUSE Cedex 9 (FR); AURIAC, Vincent, 31060 TOULOUSE Cedex 9 (FR); FEUILLERAC, Laurent, 31060 TOULOUSE Cedex 9 (FR)
(74) Mandataire: Gicquel, Olivier Yves Gérard

(56) Documents cités:
- EP-A2- 2 808 593
- CN-U- 205 877 654
- FR-A1- 2 663 605
- FR-A1- 3 006 666
- IT-A1- CL20 110 003
- US-B2- 10 513 336

## Description

### DOMAINE TECHNIQUE

La présente invention concerne un ensemble pour un aéronef où ledit ensemble comporte un tableau de bord et un système de support pour une tablette tactile qui assure que la tablette tactile est facilement accessible pour un pilote. L'invention concerne également un cockpit comportant un tel ensemble et un aéronef comportant un tel cockpit.

### ETAT DE LA TECHNIQUE ANTERIEURE

Afin de préparer un aéronef avant un vol, un pilote peut utiliser une tablette tactile qui est connectée à une unité de contrôle de l'aéronef. La tablette tactile est généralement tenue par le pilote ou posée sur le côté du siège du pilote. Une telle installation n'est pas ergonomique et peu pratique pour le pilote.

Il est donc nécessaire de trouver un arrangement qui permet de positionner la tablette tactile de manière optimale pour le pilote.

FR 2 663 605 Al concerne un poste de pilotage d'aéronef, dans lequel l'écran et les claviers d'une bibliothèque électronique sont implantés sur la planche de bord, de façon à pouvoir être aisément accessible au pilote ou au copilote.

IT CL20 110 003 A1 divulgue un support mobile pour des objets tels qu'un PC portable à utiliser dans un véhicule.

CN 205 877 654 U divulgue un support d'ordinateur tablette monté sur le panneau latéral sous le hublot du cockpit.

FR 3 006 666 Al concerne un poste de pilotage d'aéronef comprenant un support pourvu d'une plateforme ayant une surface plane configurée pour accueillir un dispositif électronique, tel une tablette tactile.

EP 2 808 593 A2 divulgue un ensemble comprend une partie adaptateur configurée pour être fixée à une surface arrière d'un dispositif d'affichage électronique et une partie base configurée pour être montée sur une structure fixe dans le cockpit d'un avion.

US 10 513 336 B2 divulgue un support rétractable pour un écran, et un siège de cabine d'avion comprenant un tel support.

### EXPOSE DE L'INVENTION

Un objet de la présente invention est de proposer un ensemble pour un aéronef où ledit ensemble comporte un tableau de bord et un système de support pour une tablette tactile qui assure le maintien de la tablette tactile devant le pilote.

A cet effet, est proposé un ensemble pour un aéronef, ledit ensemble comportant :
- un châssis destiné à être fixé à une structure de l'aéronef,
- un tableau de bord fixé au châssis,
- un système de support comportant un bras dont une première extrémité est fixée au châssis et un plateau monté à une deuxième extrémité du bras, où le bras est arrangé pour déplacer le plateau alternativement d'une position escamotée dans laquelle le plateau (208) est à l'intérieur du tableau de bord à une position sortie dans laquelle le plateau est en arrière du tableau de bord, et où le plateau comporte un premier moyen d'accrochage, et
- un support comportant un deuxième moyen d'accrochage qui coopère avec le premier moyen d'accrochage pour fixer de manière amovible le support sur le plateau, et un système de fixation destiné à assurer la fixation de manière amovible d'une tablette tactile sur le support.
Avec un tel ensemble, la tablette tactile est maintenue sans l'aide du pilote et elle se positionne devant lui pour un accès aisé.

Avantageusement, le tableau de bord comporte une fenêtre, et le bras est mobile alternativement entre une position allongée dans laquelle le plateau se projette en arrière du tableau de bord, et une position rétractée dans laquelle le bras est escamoté dans le tableau de bord en rentrant par la fenêtre.

Avantageusement, le passage de la position escamotée à la position d'utilisation s'effectue par une translation.

Avantageusement, le support comporte une première pièce et une deuxième pièce, chaque pièce comporte une mâchoire qui fait face à la mâchoire de l'autre pièce, les deux pièces sont mobiles en translation l'une par rapport à l'autre entre une position serrée où les deux mâchoires sont rapprochées et une position écartée où les deux mâchoires sont écartées, et le support comporte un moyen de rappel qui contraint les deux pièces dans la position serrée.

Avantageusement, la liaison entre le premier moyen d'accrochage et le deuxième moyen d'accrochage prend la forme d'une fixation de type baïonnette.

Avantageusement, le deuxième moyen d'accrochage prend la forme d'un cylindre mâle muni de deux ergots en saillie, le premier moyen d'accrochage prend la forme d'un cylindre femelle comportant pour chaque ergot, une rainure qui s'étend parallèlement à un axe de cylindre, au fond de chaque rainure est prévue une saignée qui s'étend sur la périphérie du cylindre femelle, et chaque saignée s'étend de part et d'autre de la rainure.

Avantageusement, le plateau est constitué d'un sous-plateau inférieur fixé au bras et d'un sous-plateau supérieur monté mobile en rotation sur le sous-plateau inférieur entre une position repliée et une position dépliée, le sous-plateau inférieur présente une face supérieure, le sous-plateau supérieur présente une face inférieure et une face supérieure portant le premier moyen d'accrochage, en position repliée, la face inférieure du sous-plateau supérieur est contre la face supérieure du sous-plateau inférieur, et en position dépliée, la face supérieure du sous-plateau inférieur est alignée avec la face inférieure du sous-plateau supérieur.

L'invention propose également un cockpit d'un aéronef, ledit cockpit comportant un siège pour un pilote et un ensemble selon l'une des variantes précédentes, disposé devant ledit siège.

Avantageusement, le cockpit comporte un vide-poche disposé à côté du siège, et le vide-poche est équipé d'un connecteur qui s'interconnecte avec un connecteur de la tablette tactile lorsque cette dernière est dans le vide-poche.
L'invention propose également un aéronef comportant un cockpit selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] montre une vue de côté d'un aéronef selon l'invention,
[Fig. 2] montre une vue en perspective et de derrière d'un système de support d'un ensemble avec un tableau de bord selon l'invention,
[Fig. 3] montre une vue en perspective et de devant d'un support de l'ensemble selon l'invention, et
[Fig. 4] est une vue en perspective de l'ensemble selon l'invention.

### EXPOSE DETAILLE DE MODES DE REALISATION

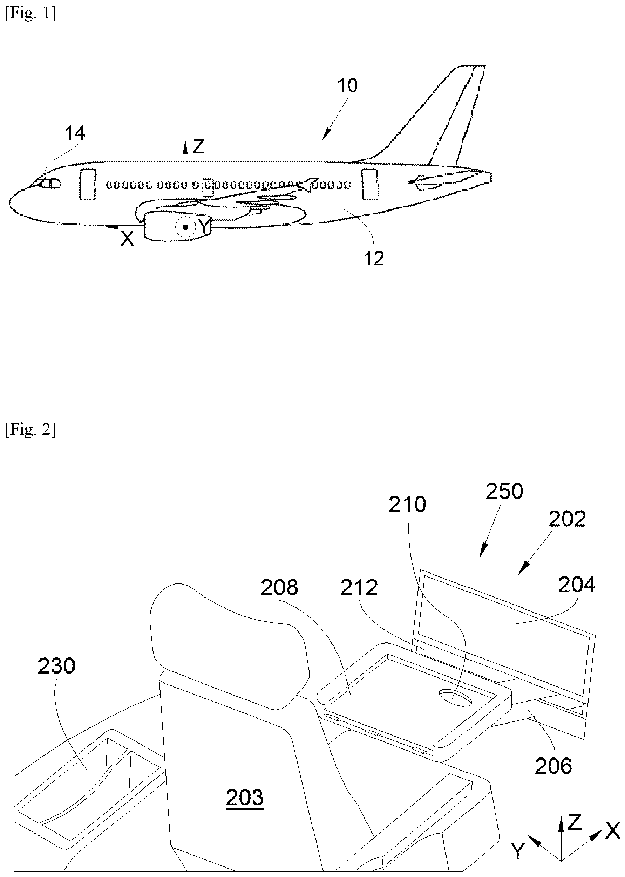

La Fig. 1 montre un aéronef 10 qui comporte un fuselage 12 à l'avant duquel est disposé un cockpit 14 dans lequel prend place au moins un pilote.

Dans la description qui suit, et par convention, on appelle X la direction longitudinale horizontale de l'aéronef orientée positivement dans le sens d'avancement de l'aéronef, c'est-à-dire vers l'avant de l'aéronef, on appelle Y la direction transversale de l'aéronef qui est horizontale lorsque l'aéronef est au sol, et Z la direction verticale ou hauteur verticale lorsque l'aéronef est au sol, ces trois directions X, Y et Z étant orthogonales entre elles.

La Fig. 2 montre un ensemble 250 qui est disposé dans le cockpit 14 et devant un siège 203 pour un pilote.

L'ensemble 250 comporte un châssis qui est fixé à une structure de l'aéronef 10 et un tableau de bord 204 qui est fixé au châssis. Le tableau de bord 204 porte de manière connue différents indicateurs et commandes de l'aéronef 10 et se positionne devant le siège 203.

L'ensemble 250 comporte également un système de support 202 qui comporte un bras 206 fixé par une première extrémité au châssis et un plateau 208 monté à une deuxième extrémité du bras 206.

Par rapport à la direction générale de l'aéronef 10, le bras 206 est arrangé pour déplacer le plateau 208 alternativement d'une position escamotée dans laquelle le plateau 208 est à l'intérieur du tableau de bord 204 à une position sortie dans laquelle le plateau 208 est en arrière du tableau de bord 204 et devant le pilote et le siège 203, c'est-à-dire plus précisément entre le tableau de bord 204 et le siège 203. La position sortie correspond à une position d'utilisation du plateau 208.

Le bras 206 peut prendre alternativement deux positions, à savoir une position rétractée qui correspond à la position escamotée du plateau 208 et dans laquelle le bras 206 est raccourci et à l'intérieur du tableau de bord 204, et une position allongée qui correspond à la position sortie du plateau 208 et dans laquelle le bras 206 est allongé et sort en partie du tableau de bord 204. Pour faciliter la manipulation du bras 206, celui-ci présente une poignée qui permet la prise en main du bras 206 par le pilote. Pour maintenir le bras 206 en position allongée, le bras 206 est équipé de moyens de verrouillage qui le bloquent en position allongée lorsqu'aucune action volontaire du pilote n'est exercée pour le faire passer en position rétractée. Ces moyens de verrouillage peuvent être tous moyens connus de l'homme du métier, comme par exemple des billes sur ressort. Le bras 206 est ici télescopique.

Pour que le plateau 208 puisse prendre une position ergonomique par rapport au pilote, le plateau 208 est monté articulé sur le bras 206.

Le cockpit 14 comporte également un vide-poche 230 qui est disposé à côté du siège 203 et qui est à portée de main du pilote.

Le plateau 208 comporte un premier moyen d'accrochage 210 qui sera décrit plus précisément ci-dessous.

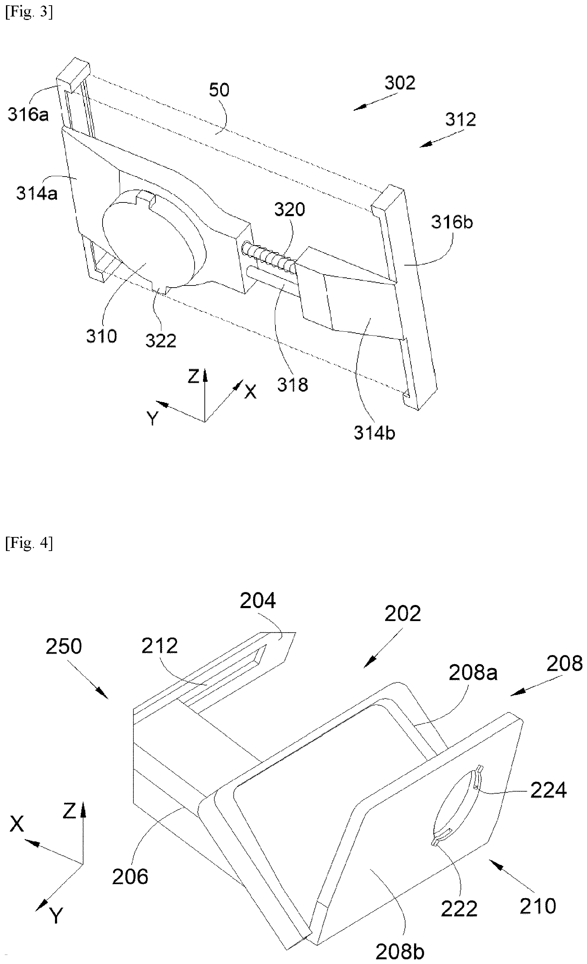

L'ensemble 250 comporte également un support 302 qui est représenté à la Fig. 3.

Le support 302 comporte un deuxième moyen d'accrochage 310 qui coopère avec le premier moyen d'accrochage 210 pour fixer de manière amovible le support 302 sur le plateau 208. Le support 302 comporte également un système de fixation 312 qui assure la fixation de manière amovible d'une tablette tactile 50 sur le support 302.

L'amovibilité des fixations assure que la séparation des éléments s'effectue sans dégradation et de manière simple et sans outil.

Ainsi, la mise en place et le retrait de la tablette tactile 50 s'effectuent d'une manière simple et elle est toujours positionnée et maintenue de manière ergonomique devant le pilote. Lorsque la tablette tactile 50 n'est pas utilisée, elle peut être rangée dans le vide-poche 230 tout en restant montée sur le support 302.

Dans le mode de réalisation présenté à la Fig. 2, le tableau de bord 204 comporte une fenêtre 212 et, comme décrit ci-dessus, le bras 206 est monté coulissant sur le châssis et à travers ladite fenêtre 212 selon une direction de translation pour s'escamoter avec le plateau 208 dans le tableau de bord 204 lorsque le pilote n'a pas besoin du plateau 208. La direction de translation est globalement perpendiculaire au plan de la fenêtre 212 et ici globalement parallèle à la direction longitudinale.

En position sortie/allongée, le bras 206 et donc le plateau 208 se projettent en arrière du tableau de bord 204 par rapport à l'orientation de la direction longitudinale de l'aéronef 10 et donc vers le siège 203. En position escamotée/rétractée, le bras 206 et le plateau 208 sont escamotés dans le tableau de bord 204 en rentrant par la fenêtre 212.

Le support 302 comporte une première pièce 314a et une deuxième pièce 314b. Chaque pièce 314a-b comporte une mâchoire 316a-b qui fait face à la mâchoire 316b-a de l'autre pièce 314b-a et la tablette tactile 50 se positionne entre les mâchoires 316a-b.

Les deux pièces 314a-b sont mobiles en translation l'une par rapport à l'autre entre une position serrée où les deux mâchoires 316a-b sont rapprochées et une position écartée où les deux mâchoires 316a-b sont écartées. Le support 302 comporte en outre un moyen de rappel qui contraint les deux pièces 314a-b dans la position serrée.

Dans le mode de réalisation de l'invention présenté à la Fig. 3, la translation des deux pièces 314a-b est réalisée ici par deux guides 318 qui sont fixés à une des parties 314a-b et où l'autre partie 314b-a coulisse le long des deux guides 318.

Le moyen de rappel est ici un ressort 320 fixé entre les deux parties 314a-b qui sont étroites et épaisses pour faciliter leur manipulation par les mains du pilote.

La Fig. 4 montre le système de support 202 dans une position particulière, et où le plateau 208 est constitué de deux sous-plateaux 208a-b qui sont montés articulés l'un par rapport à l'autre autour d'une liaison charnière horizontale et transversale par rapport à la direction de translation du bras 206.

Le plateau 208 comporte ainsi un sous-plateau inférieur 208a et un sous-plateau supérieur 208b. Le sous-plateau inférieur 208a est fixé au bras 206 et le sous-plateau supérieur 208b est donc monté articulé sur le sous-plateau inférieur 208a et il est mobile en rotation entre une position repliée et une position dépliée. La liaison charnière est réalisée au niveau des bords arrière des deux sous-plateaux 208a-b lorsque le sous-plateau supérieur 208b est en position repliée.

Le premier moyen d'accrochage 210 est disposé au niveau d'une surface supérieure du sous-plateau supérieur 208b.

En position repliée, le sous-plateau supérieur 208b est appliqué contre le sous-plateau inférieur 208a et présente le premier moyen d'accrochage 210 orienté vers le haut pour être accessible et visible par le pilote. La face inférieure du sous-plateau supérieur 208b est ainsi contre la face supérieure du sous-plateau inférieur 208a. Dans cette position, le support 302 et la tablette tactile 50 peuvent être fixés au sous-plateau supérieur 208b.

En position dépliée, le sous-plateau supérieur 208b est aligné avec le sous-plateau inférieur 208a pour constituer une plus grande surface et permettre au pilote de déposer par exemple un plateau repas. Dans cette position, le premier moyen d'accrochage 210 orienté vers le bas n'est pas accessible par le pilote. La face supérieure du sous-plateau inférieur 208a est alors alignée avec une face inférieure du sous-plateau supérieur 208b, ici la surface ne portant pas le premier moyen d'accrochage 210.

Dans le mode de réalisation de l'invention présenté aux Figs. 3 et 4, la liaison entre le premier moyen d'accrochage 210 et le deuxième moyen d'accrochage 310 prend la forme d'une fixation de type baïonnette. Le deuxième moyen d'accrochage 310 est fixé ici sur la première pièce 314a, mais il peut être fixé sur la deuxième pièce 314b. Bien que la liaison entre les moyens d'accrochage 210 et 310 soit montrée dans le cas d'un plateau 208 avec deux sous-plateaux 208a-b articulés, elle peut être mise en œuvre également dans le cas d'un plateau 208 simple. Le deuxième moyen d'accrochage 310 prend la forme d'un cylindre mâle muni de deux ergots 322 en saillie radialement et le premier moyen d'accrochage 210 prend la forme d'un cylindre femelle qui s'inscrit ici dans l'épaisseur du sous-plateau supérieur 208b. Le cylindre mâle et le cylindre femelle sont coaxiaux par rapport à un même axe de cylindre.

Le cylindre femelle comporte pour chaque ergot 322, une rainure 222 radiale qui s'étend parallèlement à l'axe de cylindre.

Au fond de chaque rainure 222 est prévue une saignée 224 qui s'étend sur la périphérie du cylindre femelle et qui est destinée à recevoir un ergot 322 pour le verrouillage du deuxième moyen d'accrochage 310.

Le montage du deuxième moyen d'accrochage 310 consiste à introduire le cylindre mâle dans le cylindre femelle, et chaque ergot 322 dans une rainure 222, et lorsque chaque ergot 322 a atteint le fond de sa rainure 222, le deuxième moyen d'accrochage 310, et donc le support 302, sont pivotés autour de l'axe de cylindre pour introduire chaque ergot 322 dans la saignée 224 correspondante.

Afin de permettre le positionnement de la tablette 50 en position paysage ou portrait, chaque saignée 224 s'étend de part et d'autre de la rainure 222, permettant ainsi une rotation du deuxième moyen d'accrochage 310 selon deux directions opposées.

Dans le mode de réalisation de l'invention présenté à la Fig. 2, les deux rainures 222 sont alignées entre elles et décalées de 45° par rapport à la direction longitudinale X, et chaque saignée 224 s'étend à 45° de part et d'autre de la rainure 222.

Le vide-poche 230 peut être équipé d'un connecteur qui s'interconnecte avec un connecteur de la tablette tactile 50 lorsque cette dernière est dans le vide-poche 230 pour assurer la recharge électrique de la batterie de la tablette tactile 50. Selon un mode de réalisation particulier, le connecteur du vide-poche 230 est au fond dudit vide-poche 230 pour permettre une interconnexion aisée des deux connecteurs simplement par descente de la tablette tactile 50.

## Revendications

1. Ensemble (250) pour un aéronef (10), ledit ensemble (250) comportant :
- un châssis destiné à être fixé à une structure de l'aéronef (10),
- un tableau de bord (204) fixé au châssis,
- un système de support (202) comportant un bras (206) dont une première extrémité est fixée au châssis et un plateau (208) monté à une deuxième extrémité du bras (206), où le bras (206) est arrangé pour déplacer le plateau (208) alternativement d'une position escamotée dans laquelle le plateau (208) est à l'intérieur du tableau de bord (204) à une position sortie dans laquelle le plateau (208) est en arrière du tableau de bord (204), et où le plateau (208) comporte un premier moyen d'accrochage (210), et
- un support (302) comportant un deuxième moyen d'accrochage (310) qui coopère avec le premier moyen d'accrochage (210) pour fixer de manière amovible le support (302) sur le plateau (208), et un système de fixation (312) destiné à assurer la fixation de manière amovible d'une tablette tactile (50) sur le support (302).

2. Ensemble (250) selon la revendication 1, **caractérisé en ce que** le tableau de bord (204) comporte une fenêtre (212), et **en ce que** le bras (206) est mobile alternativement entre une position allongée dans laquelle le plateau (208) se projette en arrière du tableau de bord (204), et une position rétractée dans laquelle le plateau (208) est escamoté dans le tableau de bord (204) en rentrant par la fenêtre (212).

3. Ensemble (250) selon la revendication 2, **caractérisé en ce que** le passage de la position escamotée à la position d'utilisation s'effectue par une translation.

4. Ensemble (250) selon l'une des revendications 1 à 3, **caractérisé en ce que** le support (302) comporte une première pièce (314a) et une deuxième pièce (314b), **en ce que** chaque pièce (314a-b) comporte une mâchoire (316a-b) qui fait face à la mâchoire (316b-a) de l'autre pièce (314b-a), **en ce que** les deux pièces (314a-b) sont mobiles en translation l'une par rapport à l'autre entre une position serrée où les deux mâchoires (316a-b) sont rapprochées et une position écartée où les deux mâchoires (316a-b) sont écartées, et **en ce que** le support (302) comporte un moyen de rappel qui contraint les deux pièces (314a-b) dans la position serrée.

5. Ensemble (250) selon l'une des revendications 1 à 4, **caractérisé en ce que** la liaison entre le premier moyen d'accrochage (210) et le deuxième moyen d'accrochage (310) prend la forme d'une fixation de type baïonnette.

6. Ensemble (250) selon la revendication 5, **caractérisé en ce que** le deuxième moyen d'accrochage (310) prend la forme d'un cylindre mâle muni de deux ergots (322) en saillie, **en ce que** le premier moyen d'accrochage (210) prend la forme d'un cylindre femelle comportant pour chaque ergot (322), une rainure (222) qui s'étend parallèlement à un axe de cylindre, **en ce qu'**au fond de chaque rainure (222) est prévue une saignée (224) qui s'étend sur la périphérie du cylindre femelle, et **en ce que** chaque saignée (224) s'étend de part et d'autre de la rainure (222).

7. Ensemble (250) selon l'une des revendications 1 à 6, **caractérisé en ce que** le plateau (208) est constitué d'un sous-plateau inférieur (208a) fixé au bras (206) et d'un sous-plateau supérieur (208b) monté mobile en rotation sur le sous-plateau inférieur (208a) entre une position repliée et une position dépliée, **en ce que** le sous-plateau inférieur (208a) présente une face supérieure, **en ce que** le sous-plateau supérieur (208b) présente une face inférieure et une face supérieure portant le premier moyen d'accrochage (210), **en ce qu'**en position repliée, la face inférieure du sous-plateau supérieur (208b) est contre la face supérieure du sous-plateau inférieur (208a), et **en ce qu'**en position dépliée, la face supérieure du sous-plateau inférieur (208a) est alignée avec la face inférieure du sous-plateau supérieur (208b).

8. Cockpit (14) d'un aéronef (10), ledit cockpit (14) comportant un siège (203) pour un pilote et un ensemble (250) selon l'une des revendications précédentes, disposé devant ledit siège (203).

9. Cockpit (14) selon la revendication 8, **caractérisé en ce qu'**il comporte un vide-poche (230) disposé à côté du siège (203), et **en ce que** le vide-poche (230) est équipé d'un connecteur qui s'interconnecte avec un connecteur de la tablette tactile (50) lorsque cette dernière est dans le vide-poche (230).

10. Aéronef (10) comportant un cockpit (14) selon la revendication précédente.

## Patentansprüche

1. Anordnung (250) für ein Luftfahrzeug (10), wobei die Anordnung (250) umfasst:
- ein Gestell, das dazu bestimmt ist, an einer Struktur des Luftfahrzeugs (10) befestigt zu werden,
- ein Armaturenbrett (204), das am Gestell befestigt ist,
- ein Trägersystem (202), das einen Arm (206), von dem ein erstes Ende am Gestell befestigt ist, und eine Platte (208), die an einem zweiten Ende des Armes (206) angebracht ist, umfasst, wobei der Arm (206) dazu eingerichtet ist, die Platte (208) abwechselnd aus einer eingeschobenen Position, in welcher sich die Platte (208) im Inneren des Armaturenbretts (204) befindet, in eine ausgefahrene Position, in welcher sich die Platte (208) hinter dem Armaturenbrett (204) befindet, zu verlagern, und wobei die Platte (208) ein erstes Einhängemittel (210) umfasst, und
- einen Träger (302), der ein zweites Einhängemittel (310), welches mit dem ersten Einhängemittel (210) zusammenwirkt, um den Träger (302) lösbar auf der Platte (208) zu befestigen, und ein Befestigungssystem (312), das dazu bestimmt ist, die lösbare Befestigung eines Touchpads (50) auf dem Träger (302) sicherzustellen, umfasst.

2. Anordnung (250) nach Anspruch 1, **dadurch gekennzeichnet, dass** das Armaturenbrett (204) ein Fenster (212) umfasst, und dadurch, dass der Arm (206) zwischen einer gestreckten Position, in welcher die Platte (208) hinter dem Armaturenbrett (204) vorsteht, und einer zurückgezogenen Position, in welcher die Platte (208) in das Armaturenbrett (204) eingeschoben ist, wobei sie sich durch das Fenster (212) zurückbewegt, hin und her bewegbar ist.

3. Anordnung (250) nach Anspruch 2, **dadurch gekennzeichnet, dass** der Übergang aus der eingeschobenen Position in die Verwendungsposition durch eine Translation bewirkt wird.

4. Anordnung (250) nach einem der Ansprüche 1 bis 3, **dadurch gekennzeichnet, dass** der Träger (302) ein erstes Teil (314a) und ein zweites Teil (314b) umfasst, und dadurch, dass jedes Teil (314a-b) eine Klemmbacke (316ab) umfasst, welche der Klemmbacke (316b-a) des anderen Teils (314b-a) gegenüberliegt, und dadurch, dass die Teile (314a-b) relativ zueinander zwischen einer Klemmposition, in der die zwei Klemmbacken (316a-b) aneinander angenähert sind, und einer beabstandeten Position, in der die zwei Klemmbacken (316a-b) voneinander beabstandet sind, translatorisch beweglich sind, und dadurch, dass der Träger (302) ein Rückstellmittel umfasst, welches die zwei Teile (314a-b) in die Klemmposition vorspannt.

5. Anordnung (250) nach einem der Ansprüche 1 bis 4, **dadurch gekennzeichnet, dass** die Verbindung zwischen dem ersten Einhängemittel (210) und dem zweiten Einhängemittel (310) die Form einer Bajonettbefestigung annimmt.

6. Anordnung (250) nach Anspruch 5, **dadurch gekennzeichnet, dass** das zweite Einhängemittel (310) die Form eines einsteckbaren Zylinders annimmt, der mit zwei vorstehenden Ansätzen (322) versehen ist, dadurch, dass das erste Einhängemittel (210) die Form eines Aufnahmezylinders annimmt, der für jeden Ansatz (322) eine Nut (222) umfasst, welche sich parallel zu einer Zylinderachse erstreckt, dadurch, dass am Boden jeder Nut (222) ein Spalt (224) vorgesehen ist, welcher sich auf dem Umfang des Aufnahmezylinders erstreckt, und dadurch, dass sich jeder Spalt (224) beiderseits der Nut (222) erstreckt.

7. Anordnung (250) nach einem der Ansprüche 1 bis 6, **dadurch gekennzeichnet, dass** die Platte (208) aus einer unteren Teilplatte (208a), die am Arm (206) befestigt ist, und einer oberen Teilplatte (208b), die auf der unteren Teilplatte (208a) drehbeweglich zwischen einer zusammengeklappten Position und einer aufgeklappten Position angebracht ist, besteht, dadurch, dass die untere Teilplatte (208a) eine Oberseite aufweist, dadurch, dass die obere Teilplatte (208b) eine Unterseite und eine das erste Einhängemittel (210) tragende Oberseite aufweist, dadurch, dass in der zusammengeklappten Position die Unterseite der oberen Teilplatte (208b) an der Oberseite der unteren Teilplatte (208a) anliegt, und dadurch, dass in der aufgeklappten Position die Oberseite der unteren Teilplatte (208a) mit der Unterseite der oberen Teilplatte (208b) fluchtet.

8. Cockpit (14) eines Luftfahrzeugs (10), wobei das Cockpit (14) einen Sitz (203) für einen Piloten und eine Anordnung (250) nach einem der vorhergehenden Ansprüche, die vor dem Sitz (203) angeordnet ist, umfasst.

9. Cockpit (14) nach Anspruch 8, **dadurch gekennzeichnet, dass** es ein Ablagefach (230) umfasst, das neben dem Sitz (203) angeordnet ist, und dadurch, dass das Ablagefach (230) mit einem Verbinder ausgestattet ist, welcher sich mit einem Verbinder des Touchpads (50) verbindet, wenn sich dieses Letztere im Ablagefach (230) befindet.

10. Luftfahrzeug (10), welches ein Cockpit (14) nach dem vorhergehenden Anspruch umfasst.

## Claims

1. Assembly (250) for an aircraft (10), said assembly (250) comprising:
- a frame intended to be fixed to a structure of the aircraft (10),
- an instrument panel (204), fixed to the frame,
- a support system (202) comprising an arm (206) of which a first end is fixed to the frame and a tray (208) mounted at a second end of the arm (206), in which the arm (206) is arranged to displace the tray (208) alternately from a retracted position in which the tray (208) is inside the instrument panel (204) to an extended position in which the tray (208) is behind the instrument panel (204), and in which the tray (208) comprises a first attachment means (210), and
- a support (302) comprising a second attachment means (310) which cooperates with the first attachment means (210) to removably fix the support (302) onto the tray (208), and a fixing system (312) intended to ensure the removable fixing of a touch tablet (50) onto the support (302).

2. Assembly (250) according to Claim 1, **characterized in that** the instrument panel (204) comprises a window (212), and **in that** the arm (206) is movable alternately between an extended position in which the tray (208) is projected behind the instrument panel (204), and a retracted position in which the tray (208) is retracted into the instrument panel (204) by entering through the window (212).

3. Assembly (250) according to Claim 2, **characterized in that** the transition from the retracted position to the position of use is performed by a translation.

4. Assembly (250) according to one of Claims 1 to 3, **characterized in that** the support (302) comprises a first part (314a) and a second part (314b), **in that** each part (314a-b) comprises a jaw (316a-b) which faces the jaw (316b-a) of the other part (314b-a), **in that** the two parts (314a-b) are translationally movable with respect to one another between a tightened position in which the two jaws (316a-b) are brought closer together and a separated position in which the two jaws (316a-b) are moved away from one another, and **in that** the support (302) comprises a return means which constrains the two parts (314a-b) into the tightened position.

5. Assembly (250) according to one of Claims 1 to 4, **characterized in that** the link between the first attachment means (210) and the second attachment means (310) takes the form of a fixing of bayonet type.

6. Assembly (250) according to Claim 5, **characterized in that** the second attachment means (310) takes the form of a male cylinder provided with two protruding lugs (322), **in that** the first attachment means (210) takes the form of a female cylinder comprising, for each lug (322), a groove (222) which extends parallel to a cylinder axis, **in that** at the bottom of each groove (222) a recess (224) is provided which extends over the periphery of the female cylinder, and **in that** each recess (224) extends on either side of the groove (222).

7. Assembly (250) according to one of Claims 1 to 6, **characterized in that** the tray (208) is composed of a lower sub-tray (208a) fixed to the arm (206) and of an upper sub-tray (208b) mounted to be rotationally movable on the lower sub-tray (208a) between a folded position and an unfolded position, **in that** the lower sub-tray (208a) has a top face, **in that** the upper sub-tray (208b) has a bottom face and a top face bearing the first attachment means (210), **in that**, in the folded position, the bottom face of the upper sub-tray (208b) is against the top face of the lower sub-tray (208a), and **in that**, in the unfolded position, the top face of the lower sub-tray (208a) is aligned with the bottom face of the upper sub-tray (208b).

8. Cockpit (14) of an aircraft (10), said cockpit (14) comprising a seat (203) for a pilot and an assembly (250) according to one of the preceding claims, disposed in front of said seat (203).

9. Cockpit (14) according to Claim 8, **characterized in that** it comprises a parcel tray (230) disposed alongside the seat (203), and **in that** the parcel tray (230) is equipped with a connector which interconnects with a connector of the touch tablet (50) when the latter is in the parcel tray (230).

10. Aircraft (10) comprising a cockpit (14) according to the preceding claim.
